(19) **Europäisches Patentamt / European Patent Office / Office européen des brevets**

(11) **EP 2 539 809 B1**

(12) **EUROPEAN PATENT SPECIFICATION**

(45) Date of publication and mention
of the grant of the patent:
**18.01.2017 Bulletin 2017/03**

(51) Int Cl.:
*G06F 9/44* (2006.01)  *G06T 5/40* (2006.01)
*G06F 19/00* (2011.01)  *G06T 5/00* (2006.01)

(21) Application number: **11703899.2**

(22) Date of filing: **17.02.2011**

(86) International application number:
**PCT/EP2011/052322**

(87) International publication number:
**WO 2011/104160 (01.09.2011 Gazette 2011/35)**

(54) **CLIENT BROWSER IMAGE RENDERING METHOD AND SYSTEM**

VERFAHREN UND SYSTEM ZUM RENDERING VON CLIENT-BROWSER-BILDERN

PROCÉDÉ ET SYSTÈME DE RENDU D'IMAGE DE NAVIGATEUR CLIENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.02.2010 US 710989**

(43) Date of publication of application:
**02.01.2013 Bulletin 2013/01**

(73) Proprietor: **Agfa Healthcare
2640 Mortsel (BE)**

(72) Inventor: **WALLACE, William Eric
Waterloo, Ontario N2L 5YA (CA)**

(56) References cited:
**WO-A1-99/28858      WO-A2-2010/057074
US-A1- 2007 177 779   US-A1- 2007 269 115
US-A1- 2010 303 327**

**Description**

The embodiments described herein relate to systems and methods for viewing images.

INTRODUCTION

Images are often stored on one or more servers and viewed at a remote computing device. In such systems, the image is often transmitted from the server to the client through a network. The image is then displayed at the client. In some systems the client comprises an Internet or web browser. Such systems are sometimes used to view medical images generated by a modality and stored on a server.

SUMMARY

WO 99/28858 (Algotec Systems LTD [IL]; Burak Yoram [IL]; Nizry Ronen [IL]; Benjamin) 10 June 1999 relates to compression and transmission of diagnostic quality images. For a medical diagnostic image a desired compressed image quality is selected and the image is compressed using a lossy compression method such that a reconstructed image will have substantially the desired compressed image quality.

The desired compressed image quality may be selected responsive to a windowing parameter or to a viewing parameter supplied by a diagnostician or the imaging technician or to diagnosis related information associated with the image or to a noise level in at least part of the image.

The state of the art does not provide a solution to the problem dealt with in the present application, namely the image rendering on a client computer of an image stored on a server where the dynamic range provided by the client is smaller than that on the server computer.

The invention is set out as defined in the independent claims 1 and 8.

The embodiments described herein provide in one aspect, a method of displaying a transformation of a server image on a display, the server image is stored on a server and has a first dynamic range, the display has a second dynamic range, the second dynamic range is less than the first dynamic range, the method comprising:

    a) selecting a desired window level;
    b) determining a server window level, the server window level contains the desired window level;
    c) performing a window level operation on the server image at the server to generate the server window level;
    d) transmitting the server window level from the server to a client;
    e) determining a third window level so that the third window level when combined with the server window level is substantially equal to the desired window level;
    f) performing the third window level on the server window to yield the desired window level; and
    g) displaying the desired window level on the display.

The embodiments described herein provide in another aspect, a method of displaying a transformation of a server image on a display, the server image is stored on a server and has a first dynamic range, the display has a second dynamic range, the second dynamic range is less than the first dynamic range, the method comprising:

    a) selecting a desired window level to be viewed;
    b) determining a plurality of server window levels, at least one of the plurality of server window levels contains the desired window level;
    c) performing a plurality of window level operations on the server image based on the plurality of server window levels;
    d) generating at least one storage image, each of the at least one storage images having the second dynamic range and at least one color channel, by storing the plurality of server window levels in the color channels of the at least one storage image; and
    e) transmitting the storage image from the server to a client;
    f) performing a transformation to yield the desired window level; and
    g) displaying the desired window level on the display.

The embodiments described herein provide in another aspect, a system for displaying a transformation of a server image on a display, the server image is stored on a server and has a first dynamic range, the display has a second dynamic range, the second dynamic range is less than the first dynamic range, the system comprising:

    a) a memory for storing pixel data; and
    b) a processor coupled to the memory for:

i) selecting a desired window level;
ii) requesting a server window level, where the server window level contains the desired window level;
iii) receiving the server window level from the server;
iv) determining a third window level so that the third window level when combined with the server window level is substantially equal to the desired window level;
v) performing the third window level on the server window to yield the desired window level; and
vi) displaying the desired window level on the display.

The embodiments described herein provide in another aspect, a system for displaying a transformation of a server image on a display, the server image is stored on a server and has a first dynamic range, the display has a second dynamic range, the second dynamic range is less than the first dynamic range, the system comprising:

a) a memory for storing pixel data; and
b) a processor coupled to the memory for:

i) selecting a desired window level to be viewed;
ii) requesting a plurality of server window levels, at least one of the plurality of server window levels contains the desired window level;
iii) receiving at least one storage image, each of the at least one storage images having the second dynamic range and at least one color channel, each of the plurality of server window levels being stored in the color channels of the at least one storage image;
iv) performing a transformation to yield the desired window level; and
v) displaying the desired window level on the display.

DRAWINGS

For a better understanding of the embodiments described herein and to show more clearly how they may be carried into effect, reference will now be made, by way of example only, to the accompanying drawings which show at least one example embodiment, and in which:

FIGS. 1A and 1B, which are schematic diagrams illustrating example windows that may be used by the embodiments described herein during window level transformations;

FIG. 2 is an example window level transformation function;

FIG. 3 is a block diagram of various embodiments of an image viewing system;

FIG. 4 is a flowchart diagram of an example set of operational steps executed by some embodiments of the image viewing system of FIG. 3;

FIG. 5 is a flowchart diagram of an example set of operational steps executed by some embodiments of the image viewing system of FIG. 3;

FIG. 6 is a flowchart diagram of an example set of operational steps executed by some embodiments of the image viewing system of FIG. 3; and

FIGS. 7A to 7C are schematic diagrams illustrating example window sets.

It will be appreciated that for simplicity and clarity of illustration, elements shown in the figures have not necessarily been drawn to scale. For example, the dimensions of some of the elements may be exaggerated relative to other elements for clarity.

DESCRIPTION OF VARIOUS EMBODIMENTS

It will be appreciated that for simplicity and clarity of illustration, where considered appropriate, numerous specific details are set forth in order to provide a thorough understanding of the exemplary embodiments described herein. However, it will be understood by those of ordinary skill in the art that the embodiments described herein may be practiced without these specific details. In other instances, well-known methods, procedures and components have not been described in detail so as not to obscure the embodiments described herein. Furthermore, this description is not to be considered as limiting the scope of the embodiments described herein in any way, but rather as merely describing the implementation of the various embodiments described herein.

The embodiments of the systems and methods described herein may be implemented in hardware or software, or a combination of both. Some embodiments relate to systems that include both hardware and software that are used to perform window level operations. Some embodiments are implemented in computer programs executing on programmable computers each comprising at least one processor, a data storage system (including volatile and non-volatile memory and/or storage elements), at least one input device, and at least one output device. For example and without limitation, the programmable computers may be any appropriate computing device including but not limited to a personal computer, laptop, personal data assistant, smart phone, and a cellular telephone. Program code is applied to input data to perform the functions described herein and generate output information. In various embodiments, the input data relates to medical images generated by modalities. The output information is applied to one or more output devices, in known fashion. In various embodiments, the output information relates to medical images, which may for example display tissues and organs. In some embodiments, the medical images are displayed on a display, which could be for example a display of any appropriate computing device.

In some embodiments, each program is implemented in a high level procedural or object oriented programming and/or scripting language to communicate with a computer system. However, the programs can be implemented in assembly or machine language, if desired. In any case, the language may be a compiled or interpreted language. Each such computer program is preferably stored on a storage media or a device (e.g. ROM or magnetic diskette) readable by a general or special purpose programmable computer, for configuring and operating the computer when the storage media or device is read by the computer to perform the procedures described herein. In some embodiments, the inventive system may also be considered to be implemented as a computer-readable storage medium, configured with a computer program, where the storage medium so configured causes a computer to operate in a specific and predefined manner to perform the functions described herein.

Furthermore, in various embodiments, the system, processes and methods of the described embodiments are capable of being distributed in a computer program product comprising a computer readable medium that bears computer usable instructions for one or more processors. The medium may be provided in various forms, including one or more diskettes, compact disks, tapes, chips, wireline transmissions, satellite transmissions, internet transmission or downloadings, magnetic and electronic storage media, digital and analog signals, and the like. The computer useable instructions may also be in various forms, including compiled and non-compiled code.

Some of the embodiments described herein relate to systems and methods that utilize window leveling. Some of the embodiments relate to displaying a window level of an original image on a display of a computing device, where the original image is stored on a remote server. As mentioned above, in some embodiments, the images may be medical images. In some embodiments, the medical images are images of a patient that are generated by for example a modality. In some embodiments, the images can comprise images of tissues, such as for example but not limited to bones, soft tissues, and organs. Such images can also include images of any objects located inside a patient, including but not limited medical implants and foreign objects that may need to be removed such as for example, bullets or shrapnel. In some embodiments, as will be explained in greater detail below, particular window levels may be selected to better display particular features, such as for example, particular objects, organs or tissues.

Window leveling can be used to convert a portion of the dynamic range of an image that has a high dynamic range into a new image that has a lower dynamic range. In various embodiments, window leveling can be described as a linear transform on the pixel values of the original image. For example, window leveling is the standard DICOM term for a lookup table (LUT) function, where the function is a linear map. The portion of the high dynamic range image that is converted can be all or a part of the dynamic range of the original image. The term window refers to the portion or range of intensities that are selected for viewing. The term level refers to the function that maps the pixel intensities in the window of the original image to the pixel intensities of the new image. The level function can, for example be, used to skew the relative intensities of the pixels in the image as compared to the original image.

Medical images produced by modalities often have a higher dynamic range than most common computing device displays. For example, medical images may be 12 or 16 bit images; while, the program or display used to view these images may be only capable of displaying 8 bit gray scale images (or 24 bit RGB or 32 bit RGBA color images). In addition, a typical human eye can generally discern intensities with a fidelity that is equivalent to about 9 bits. For example, a browser may be used to view the image and in some cases, the browser may only support 8 bit images. To address this, the entire 12 or 16 bit image could be converted to an 8 bit image; however, this can result in a significant amount of data being lost and therefore a low fidelity image. Window leveling can be used to convert the 12 or 16 bit images (or windows of the 12 or 16 bit images) to 8 bit images in a way that produces higher fidelity images than simply converting the entire high dynamic range image to a low dynamic range image. Generally, when a window level is used to convert a high dynamic range image to an image with a lower dynamic range, information or data is lost. Therefore, a window is generally selected so as to preserve the data of interest while discarding the data that is not of interest.

Accordingly, window leveling can be used to convert a specific region of the original dynamic range to a lower dynamic range such that the specific region has high fidelity preserved, but other regions are much lower fidelity.

In addition, medical images often have features that show up in specific ranges of intensities. For example, bone may show up as a very high intensity (e.g. white); while, soft tissue may show up as lower intensity (e.g. dark gray or black). The window could be selected such that the window corresponds to the range of intensities of interest in the image to which the window is applied. In addition, or in alternative to this, the level function could be used to skew the relative intensities of pixels in a given range to accentuate features in that range. For example, important features may be separated by intensity values that are very close in magnitude, which may be difficult for the human eye to distinguish, and therefore a medical practitioner may have difficulty spotting and assessing these features. It can therefore be useful at times to expand the relative values of pixel intensities that correspond to potential features of interest by using an appropriate level function.

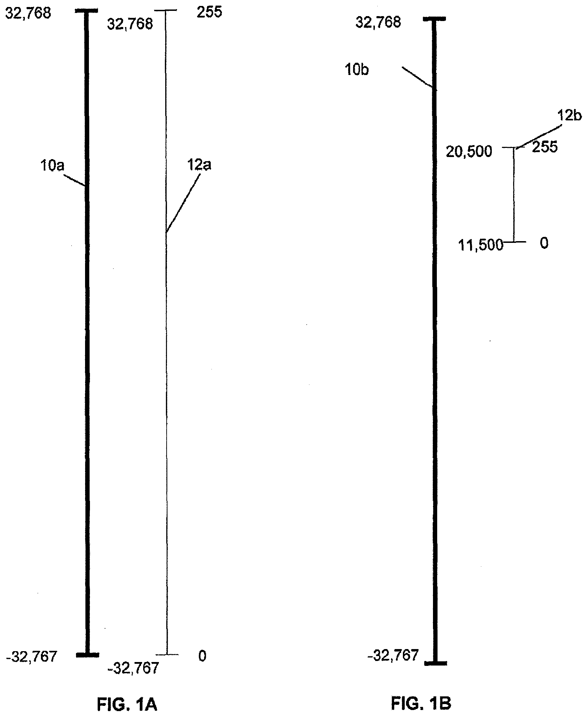

Reference is now made to FIGS. 1A and 1B, which illustrate example windows. FIG. 1A illustrates the case where the window 12a spans the entire dynamic range of the original image 10a. More specifically, the bar on the left illustrates the dynamic range, or the range of pixel values, in the original image 10a and the bar on the right illustrates the portion of the dynamic range of the original image that is incorporated in the window. In FIG. 1A the window is the entire image with a width of w=65,536. The bar on the right illustrates the range of images in the new image. The numbers on either side of the ends of window 12a illustrate the mapping of the extreme values of the window to the pixel values of the original image. Specifically, 0 in the window level corresponds to -32,767 in the original image and 255 in window level 12a corresponds to 32,768 in the original image. The level function is not illustrated. In the case of FIG. 1A, the entire original image is converted into an 8 bit image. However, by doing so a significant amount of data can be lost.

FIG. 1B illustrates the case where the window 12b has a width of w= 9000 and is centered at c=16000. Here the window is only a portion of the dynamic range of the original image. More specifically, the bar on the left illustrates the range of pixel values in the original image as well as the portion that is incorporated in the window. The bar on the right illustrates the range of pixel intensity values in the window. The numbers on either side of the ends of window 12b illustrate the mapping of the extreme values of the window to the pixel values of the original image. Specifically, 0 in the window level corresponds to 11500 in the original image and 255 in window level 12b corresponds to 20,500 in the original image. Again, the level function is not illustrated.

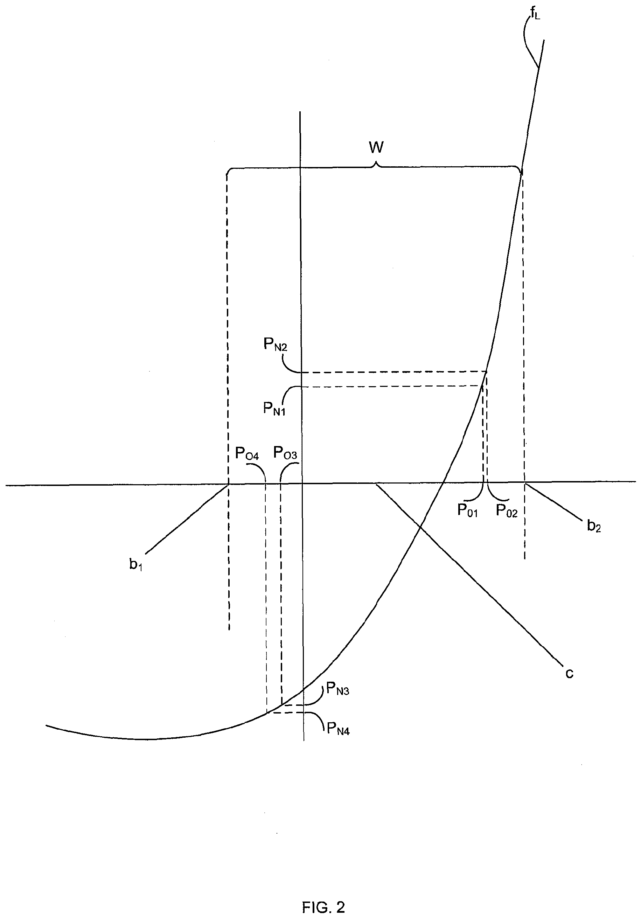

Reference is now made to FIG. 2, which is a graph illustrating a window level transformation function. The level function is the curve indicated by reference indicium $f_L$. The values of the original image are represented on the x-axis and the values generated by the window level function are represented on the y-axis. The window has a width of w= 27,853 and is centered at c= 4,915 and boundaries at -8,192 and 19,661, which are indicated by reference indicia $b_1$ and $b_2$ respectively. Level function $f_L$ accentuates and expands the higher intensity pixel values in the window and suppresses and contracts the lower intensity values in the window. For example, pixel values $P_{O1}$ = 16,382 and $P_{O2}$ = 16,384 in the original image are mapped to values $P_{N1}$ = 32 and $P_{N2}$ = 39 respectively in the window; while, pixel values $P_{O3}$ = -1,638 and $P_{O4}$ = - 3,277 are mapped to $P_{N3}$ = - 86 and $P_{N4}$ = - 89 respectively. Accordingly, the level function has emphasized the difference between the higher value pixels and suppressed the differences in the lower value pixels. Thus, the window and level function can be used to remap a portion of pixel intensity values of a first image to a second image, where the first and second images have different dynamic ranges.

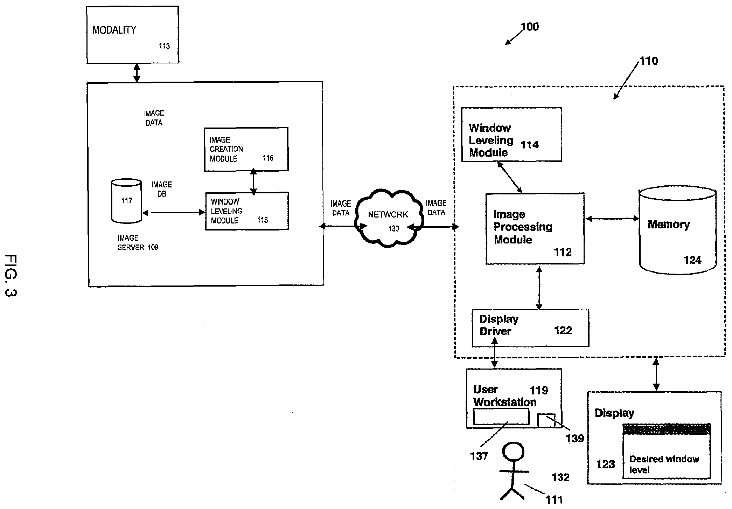

Reference is now made to FIG. 3, which illustrates a block diagram of the basic elements of various embodiments of image viewing system 100. Specifically, image viewing system 100 includes a server 109 and a client 110. In other embodiments, workstation 119 includes client 110. Server 109 includes an image creation module 116 and a window leveling module 118 and a memory device 117 for storing an image database. In various embodiments, client 110 includes a workstation 119, an image processing module 112, a window leveling module 114, a display driver 122, a display 123, and a memory device 124. In various embodiments, memory devices 117 and 124 include physical storage media. In some embodiments, server 109 may cache images and can include a separate storage device (not illustrated) for this purpose. In various embodiments, image server can also pre-cache images.

It should be understood that, as with the other figures disclosed herein, FIG. 3 is meant to be illustrative only. Other embodiments can utilize other configurations. For example, in some embodiments, image server 109 does not include an image database. In some such embodiments, image server 109 can connect to a PACS (Picture Archiving Communication System) module, which in turn may be coupled to an indexing database and an image database. The image server may communicate with the PACS module, which may either provide a requested image or it may provide a location of the requested image in the image database and image server 109 may retrieve the image from the image database directly. In some embodiments, server 109 may include a storage device for caching images.

As discussed in more detail above, it should be understood that image viewing system 100 may be implemented in hardware or software or a combination of both. Specifically, at least some of the modules of image viewing system 100 may be implemented in computer programs executing on programmable computers each comprising at least one processor, a data storage system and at least one input and at least one output device. Without limitation the programmable computers may be a mainframe computer, server, personal computer, laptop, personal data assistant, smart phone, or cellular telephone. In some embodiments, the modules of image viewing system 100 are implemented in software and installed on the hard drive of user workstation 119 and on server 109, such that user workstation 119 (and client 110) interoperates with image server 109 in a client-server configuration. In some embodiments, the image viewing system 100 can be configured to run remotely on the user workstation 119 while communication with the image server 109 occurs via a wide area network (WAN), such as through the Internet. In various embodiments, client 110 includes software such as an Internet browser for viewing images. In some embodiments, the Internet browser is a standard Internet browser.

In various embodiments, user 111 requests a particular window level at client 110 through input device 137 or user pointing device 139 of user workstation 119. The window level that is requested by user 111 will be referred to as the desired window level. In some embodiments user 111 is able to use display 123 in order to input commands, where the display 123 may, for example, comprise a touch screen. In response to user's 111 request, image processing module 112 requests a window level from image server 109. Window leveling module 118 receives the request and in turn requests image data from image database 117, which stores image data generated by modality 113. Window leveling module 118 then generates one or more window levels, which will be referred to as server window levels, based on the desired window level. In some embodiments, image creation module 116 stores the one or more server window levels generated by window leveling module 118 in the color channels of one or more images.

The one or more server window levels are then transmitted to client 110 over network 130. In some embodiments, image processing module 112 of client 110 causes window leveling module 114 to apply a third window level to one of the server window levels to generate the desired window level. In some embodiments, some aspects of the embodiments, such as for example window leveling module 114, can be implemented in JavaScript. Accordingly, in various embodiments described herein, any suitable browser can be used, such as for example a standard web browser that only supports 8 bit data can be used with no additional plugins being required. Thus, the client completes the pixel transformation to produce the desired window level. In some embodiments, this pixel transformation, that is the application of the third window level to yield the desired window level, can be accomplished using the svg filter feColorMatrix transform. Display driver then displays the desired window level on display 123. User 111 can then examine the desired window level and can request new desired window levels as desired. As mentioned above, in some embodiments, client 110 includes an Internet or web browser operating on a user workstation 109. In some embodiments, the initial window width/center is selected by the originating modality or a post-processing device of that modality. In some other embodiments, the starting values for the width/center are such that the window level encompasses the actual dynamic pixel range in the image, as opposed to the dynamic bit range available. For example, for Computed tomography (CT), the bit range is typically -1024 to 3096, while the image range is often only -100 to 1000. In other words, the bit range of -100 to 1000 is the actual range of the source data, while the range encodable in the source data is -1024 to 3096. Accordingly, in some embodiments, in which such CT images are handled, the window level is applied to the -100 to 1000 range representing the actual image and not the -1024 to 3096 range. Other embodiments, which are applied to other types of images, can apply window levels in a similar manner.

As will be explained in greater detail below, in various embodiments, the server window level is larger than and includes the desired window level. In other words, the pixel transformation performed by server 109 when producing the server window level is less exact than would be the case if server 109 were to perform the pixel transformation that corresponds to the desired window level. As will be explained below, this allows for some other desired window levels, which are "close" to the current desired window level, to be generated at the client without requesting additional pixel information from server 109. Thus, user 111 can make a variety of pixel transformations without requiring additional server data. This can reduced the amount of bandwidth that is used by the client in viewing the images and pixel transformations as compared to the case where additional pixel data is requested from the server for each new desired window level (i.e. each new pixel transformation). In addition, if there is a high delay between the server and client, the systems and methods described herein can increase interactivity. Specifically, as user 111, requests new window levels, it may not be necessary to request pixel information from the server, thereby reducing the delay associated with displaying the new window level. A further possible benefit is that it decreases server load. However, the cost of this can be a loss of client side fidelity. The degree to which fidelity is lost depends on a number of factors including but not limited to the relative size of the window levels. For example, if the sever window level is close to the desired window level then the degree of fidelity will be greater than if they are dissimilar. As will be explained in greater detail below, in some embodiments, in the background, the system requests the actual window level from the server while the lower fidelity window level is being displayed for the user. Once the higher fidelity window level is received by the client it is displayed.

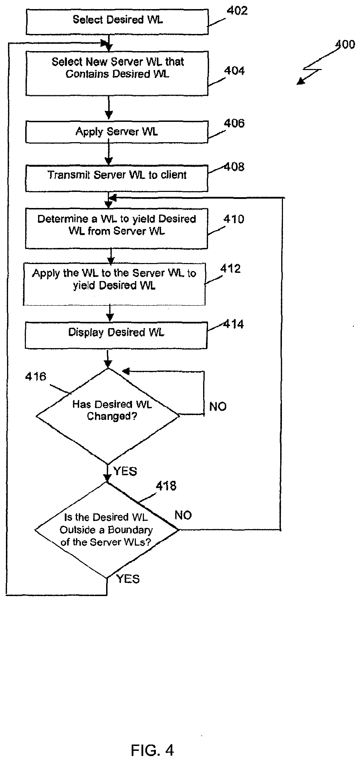

Reference is now made to FIG. 4, which is a flowchart diagram that illustrates the basic operational steps 400 taken by image viewing system 100 according to various embodiments in generating and displaying a desired window level.

At step (402) a desired window level is selected. In various embodiments the desired window level is chosen by selecting the parameters $w_D$ and $C_D$, where $w_D$ and $C_D$ are the desired window width and center respectively. In various embodiments, the desired window level is the window level selected by user 111 for viewing on display 123 at workstation 119. In some embodiments, the initial image viewed by user 111 is a window leveling of the entire original image and while viewing this image user 111 selects a desired window level based on the initial viewed image.

In various embodiments, an initial image is specified using raw device data by the modality and stored in the image database on memory device 117. Such an image then may use a modality LUT to convert from raw device data to source image pixel data. In addition, in some embodiments, the modality may also specify a particular image transformation or window leveling that targets specific values that may be of interest. Such a transformation may be referred to as a values of interest (VOI) LUT. It should be understood that window levels referred to below can be applied after the VOI LUT or alternatively, the VOI LUT can be bypassed and the window levels can be applied to the original modality LUT. The modality LUT and VOI LUT can vary depending on various factors including the type of modality, such as for example a mammogram, magnetic resonance imaging (MRI), or radiography modality.

At step (404) a server window level to be applied to the image is determined. In various embodiments, the determination of the server window level occurs at the client by window leveling module 114. Once the determination is made, client 110 requests the server window level from image server 109. The server window level has a width $W_s$ and a center $C_s$. In general, the width and center of the server window level can be different from the width and center of the desired window level.

In various embodiments, the server window level is selected such that it includes the desired window level. In some embodiments, the server window level has the same or similar center and a width that is the next power of 2 larger than twice the width of the desired window level and smaller than a width that would take the window level beyond a boundary of the original image. In some embodiments the following equation can be used to determine the window width: $W_s = 2^{ceiling(1+\log_2 w_D)}$. In some embodiments, a different equation with for example a floor function could be used depending on the application and the data available.

Thus, for example, in some embodiments, if the desired window width is $w_D = 130$, then the initial window width is $W_s = 2^{ceiling(1+\log_2 w_D)} = 2^{ceiling(1+\log_2 130)} = 2^9 = 512$. In some embodiments, as will be explained below, the use of such a method allows the window levels to be repeatable. As will be explained in greater detail below, by including a larger window level than necessary, new larger desired widow levels, which are within a certain size of the original desired window level, can be generated at the client without requesting additional pixel information from the server. As mentioned above, prior to the window level, the server may apply a modality LUT or a VOI LUT after which the server window level may be applied. In various embodiments, these window levels can be further refined at the client, to for example view specific ranges of interest, as described herein.

In some embodiments, the selection of server window levels is done in a repeatable manner and the server window levels are cached at the client. More specifically, the server window levels are selected in such a manner that a set of desired window levels in a given range will result in the same server window level being generated. In some embodiments, this is achieved by using a server window level width that is a power of two that is greater than the desired window level width. Thus for example, window widths of 256, 512, 1024 etc could be used. In addition in some embodiments, the centers that are selected for the server window levels are an integer multiple of a quarter of the width of the center. Thus, for example, for window widths of 1024 centers of -256, 0, 256 etc. can be used. It should be understood that the values given above are examples only and are not intended to be limiting in anyway. The server window levels are cached in memory 124 of client 110. The use of repeatable server window levels increases the chance of cache hits and therefore can reduce the amount of data that is transferred between the server and client and thereby reduce bandwidth requirements or increase response speeds.

At step (406) the server window level is applied. In various embodiments, the server window level is applied at the server. This can reduce the amount of data being transferred from the server to the client at any particular point in time. In various embodiments, this step is accomplished by window leveling module 118 requesting the original image from database 117 and applying the server window level to the image stored on the server.

At step (408) the server window level is transmitted from server 109 to client 110. The server window level can be transmitted over any appropriate communication channel or network, including but not limited to the Internet, a local area network (LAN) or a cellular network, from server 109 to client 110. In addition, the window level can be stored in and transferred in any appropriate format. In various embodiments, an image file is used to store the window level. In some embodiments, this is achieved by image creation module 116 creating an image file and storing the window level in a color or alpha channel of the image file. The image file is then transmitted from server 109 to client 110. It should be understood that this is given as an example only and that any appropriate format or manner of transmitting the image can be used.

At step (410) window leveling module 114 determines a third window level such that when it is combined with the server window level, it yields the desired window level. In various embodiments, the pixel value can be determined according to the following formulas:

$$S = \text{Scale} = W_S/w_D \tag{1}$$

$$I = \text{Intercept} = -\left( \frac{w_D - \dfrac{c_D}{2} - (C_S - 0.5)}{W_S - 1} + 0.5 \right) \times 255 \times S \tag{2}$$

In some embodiments, the scale and intercept calculations are applied via SVG. In other embodiments, any appropriate mechanism can be utilized for this purpose. For example, in some embodiments, any appropriate look up table can be used.

At step (412) window leveling module 114 applies the third window level to server window level image to generate the desired window level.

In the case where the display 123 has a dynamic range of 256 pixel values, the output pixels values ($P_{Output}$) can be determined according to the following formula:

$$P_{Output} = P_R \times S + I \tag{3}$$

where $P_R$ is the pixel value requested by the server, I is the intercept as determined by equation (2) above and S is the scale determined by the equation (1) given above.

Alternatively, this can be represented by the following SVG matrix: $\begin{bmatrix} S & 0 & 0 & -1 \\ S & 0 & 0 & -1 \\ S & 0 & 0 & -1 \end{bmatrix}$ where the input matrix is:

[g $X$ $X$ 1], where X indicates a variable that can have any value, that is, the X can be refereed to as a "don't care".

Table 1

| | Desired WL | | Server WL | | SVG Scale | Intercept | Original Pixel Value | Requested Pixel Value | Final Pixel Value | Desired Pixel Value |
|---|---|---|---|---|---|---|---|---|---|---|
| | Width | Center | Width | Center | | | | | | |
| WL #1 | 2048 | 1024 | 8192 | 0 | 4 | -510.0623 | 0 | 127.5156 | 0 | 0 |
| | 2048 | 1024 | 8192 | 0 | 4 | -510.0623 | 2048 | 191.2733 | 255.0311 | 255.1246 |
| WL #2 | 2048 | 2048 | 8192 | 0 | 4 | -637.5778 | 1024 | 159.3945 | 0 | 0 |
| | 2048 | 2048 | 8192 | 0 | 4 | -637.5778 | 3072 | 223.1522 | 255.0311 | 255.1246 |

EP 2 539 809 B1

Reference is now made to Table 1, which displays various values used by some embodiments of image viewing system 100. Specifically, the table illustrates two different desired window levels that can be calculated from the same server window level. The top two rows correspond to a first desired window level (WL #1) and the bottom two rows correspond to a second window level (WL #2).

In the two left most columns, the desired window level width and centers are shown. The adjacent two columns show the width and center of the server window level. The column marked scale indicates the value SVG S as calculated above. The intercept value indicates the value I as calculated by equation (2) given above. The remaining columns from left to right indicate corresponding pixel intensity values for the original image, the server window level, the final displayed image and the desired window level. Each row corresponds to a different intensity value in the original image. As can be seen, in some embodiments, there is a slight discrepancy between the actual displayed intensity values and the values in the desired window level. This occurs as a result of errors introduced during the set of linear transforms. Specifically, the value in the desired pixel value column is calculated directly from original image point. While the outputted value (i.e. the final pixel value) is calculated by first determining the corresponding value in the server window level and then by determining the corresponding output value according to formula (3) above.

The pixel in the server window level (i.e. the pixel value requested by the server) can be calculated according to the formula: $P_R = (P_{Original} - (C_s - 0.5))/(W_s - 1) + 0.5)*255$. The final displayed image value can be calculated by inserting the server pixel value into the Input Pixel variable of formal (3).

At step (414) the desired window level is displayed on display 123. User 111 can then examine the desired window level and request other desired window levels.

At step (416) it is determined whether user 111 has modified the desired window level. If not, then no action is taken. If yes, then step (418) is executed.

At step (418) it is determined whether the new desired window level is outside a boundary of the original window level. If not, then the new desired window level can be computed from the window level that was transmitted at step (408). No new information needs to be transmitted from server 109 to client 110. Accordingly, if at step (418) it is determined that the window level is not outside the boundary of the server window level, then step (410) is repeated.

In contrast, if at step (418) it is determined that the new desired window level is outside a boundary of the server window level, then step (404) is repeated. In other words, if the new desired window level is outside of the boundary of the server window level then a new server window level is transmitted from server 109 and the process repeats itself.

As described above, in some embodiments, image viewing system 100 requests a new server window level after user 111 requests a desired window level that is outside of a boundary of the server window level. Thus, for example, in some embodiments, user 111 may be viewing a window level and decide that he/she would like a different window level with a new window size or window center. The new modified desired window may be larger than the original desired window level but still lie within the server window level transmitted from the client to the server. In such a case, no new pixel information is required to generate the new desired window level. The user 111 can continue to request larger window levels or window levels with a different center without requiring additional pixel information to be transmitted from server 109 until the desired window level exceeds the server window level or moves outside the boundaries of the server window level that was transmitted from server 109 to the client 110. Once this occurs, a new server window level is requested from the server.

In various other embodiments, image viewing system 100 requests additional pixel information (i.e. a new server window level) from the server, when the new desired window level exceeds some threshold in relation to the server window level. In some embodiments, this involves determining whether the desired window level is within a threshold of the boundary or edge of the server window level. In other words when user 111 requests a pixel transformation that approaches the boundary or "edges" of the pixel data available at the client, client 110 will request additional pixel data from the server. In various embodiments, the terms boundary and edge refer to the last pixel intensity values in the range of pixel intensity values included in the window. In some embodiments, the threshold can refer to a ratio of sizes between desired window level and the server window level. In some embodiments, a new server window level can be requested if the desired window level becomes either large or small in relation to the server window level.

Thus, in various embodiments, as user 111 continues to request larger window levels or window levels with a shifted center, the desired window level may still be inside the boundary of the server window level but beyond a selected threshold. In some embodiments, once the threshold is exceeded, additional pixel information is requested from the server. This can be done for example in anticipation of the user continuing to expand the desired window level beyond the current server window level. In this manner, additional pixel information can be requested from server 109 and received at client 110, prior to the desired window level exceeding the server window level. This can allow for image information to be immediately available upon the request of user 111. In some cases, this can avoid delays associated with the transmission of the window level from the client.

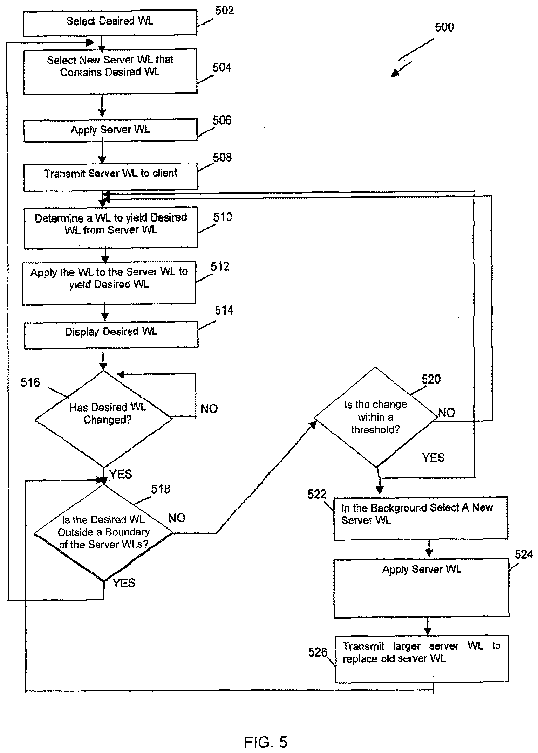

Reference is now made to FIG. 5, which is a flowchart diagram that illustrates the basic operational steps 500 taken by image viewing system 100 according to various embodiments in generating and displaying a desired window level.

At step (502) a desired window level is selected. This step is similar to step (402) of FIG. 4.

At step (504) an server window level to be applied to the image is determined. This step is similar to step (404) of FIG. 4.

At step (506) the server window level is applied. This step is analogous to step (406) of FIG. 4.

At step (508) the server window level is transmitted from server 109 to client 110. This step is analogous to step (408) of FIG. 4.

At step (510) window leveling module 114 determines a third window level such that when it is combined with the server window level it yields the desired window level.

At step (512) window leveling module 114 applies the third window level to server window level image to generate the desired window level.

At step (514) the desired window level is displayed on display 123.

At step (516) it is determined whether user 111 has modified the desired the window level. If not, then no action is taken. If yes, then step (518) is executed.

At step (518) it is determined whether the new desired window level is outside a boundary of the original window level. If not, then step (520) is executed. If yes, then additional pixel information is requested so that the desired window level can be determined. Specifically, a new server window level is requested for the new desired window level by executing step (504) and the steps that follow (504) as described above.

At step (520) a determination is made as to whether, the desired window level exceeds some threshold in relation to the server window level. In some embodiments, this comprises determining whether the desired window level is within a threshold of the boundary of the server window level. This can occur if the desired window level center is shifted or if the width is expanded or both. In alternative embodiments, a determination is made as to whether the difference in window level sizes between the new desired window level and the server window level exceeds a selected ratio. In some embodiments, a YES result at step (520) can occur if the desired window level is either large or small as compared to the server window level. In still other embodiments, the determination made at step (520) is whether either of the above two identified conditions (i.e. ratio of sizes or absolute sizes are within a threshold) are met. If the answer to the question at step (520) is determined to be NO, then it is determined that the pixel information available at client 110 is sufficient for the present time and therefore step (510) and the steps that follow (510) are repeated in order to generating the desired window level from the pixel data available at the client.

If at step (520) a YES result is determined, then steps (522) to (526) are executed in addition to step (510). In some embodiments, steps (522) to (526) are executed concurrently with step (510) as well as possibly some of the steps that follow step (510). If at step (520) the answer YES is determined then the desired window level is within a threshold of the boundary of the server window level. This may for example occur when user 111 is making incremental changes to the desired window level, which bring it closer and closer to the boundaries of the server window level. Thus, it may be useful to request additional pixel information from the server so that it is available to be used by the client should user 111 continue to alter the desired window level such that it exceeds one or more of the boundaries of the server window level.

At step (522), a new server window level is selected by client 110. This step is analogous to step (504).

At step (524), the new server window level is applied to the original medical image stored on server 109. This step is analogous to step (508).

At step (526), the new server WL is transmitted to the client 110, where it can be cached or stored in memory 124. In various embodiments, it can replace the previously transmitted server WL. This step is analogous to (508).

Given that step (520) and therefore steps (522) to (526) are reached when the current desired window level does not exceed the boundaries of the current server window level, additional pixel information is not required to determine and display the current desired window level. In other words, steps (522) to (526) need not be executed in order for the desired window level to be displayed. The desired window level can be displayed by executing steps (510) to (514). Accordingly, in some embodiments steps (524) to (526) are executed in the background concurrently with steps (510) to (516). In this manner, image data is retrieved from server 109 and available for a future desired window level requested by user 111. In some cases, having additional pixel information available at client 110 can reduce delays that might otherwise occur when requesting and transferring pixel data from server 109 to client 110.

As described above, in various embodiments, when a desired window level is requested, a server window level is generated at the server by window leveling module 118. In some embodiments, the server window level is stored in a color channel of an image. The image is then transmitted to the client. In some embodiments, the image used for storing the window level has the same dynamic range as the display 123 at the client or the dynamic range supported by the program that is used to display the image on display 123. Thus for example, if the display 123 can display 8 bit images then the image generated at image server 109 for storing the server window level is an 8 bit image.

In some embodiments, when a desired window level is requested multiple window levels are generated at the server. For example, in various embodiments one of the window levels is the same as the server window level described above. Specifically, it includes the desired window level but is larger than the desired window level. The other one or more window levels can be any appropriate window levels. In addition, in various embodiments, any number of other window levels can be generated.

The window levels can be transmitted to the client from the server in any appropriate manner. In some embodiments, the multiple window levels are transferred to the client in the color channels of one or more images. In some embodiments, multiple images are transferred. In some embodiments, each window level is stored and transferred in a different image. In some embodiments, each image is a grayscale image. In some embodiments, at least some of the images used to transfer the window levels are color images. In some embodiments, at least some of the color images are used to store more than one window level, where each window level is stored in a different color channel of the color image.

In some embodiments, the number of window levels generated is equal to three. In some embodiments, a single RGB color image is used to store each of the window levels in a different color channel. In other embodiments, three separate gray scale images are used to store one of the three window level images.

In various embodiments where more than one window level is generated, at least some of the window levels are cached in memory 124 once they are received at client 110.

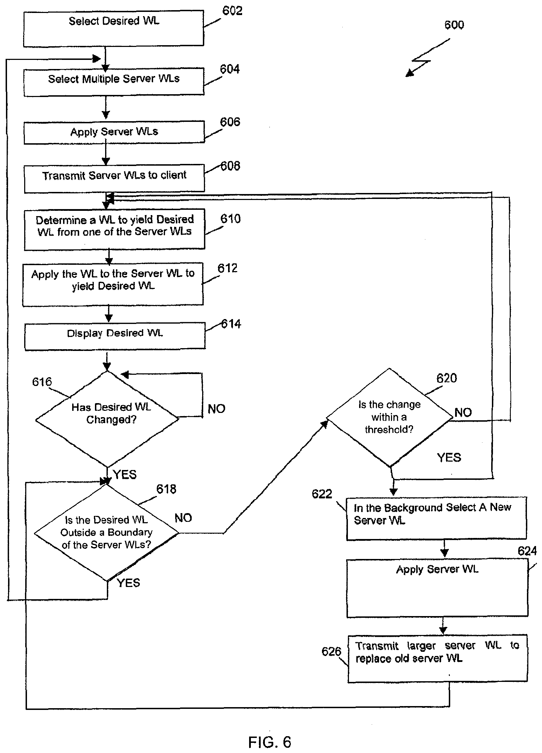

Reference is now made to FIG. 6, which is a flowchart diagram that illustrates the basic operational steps 600 taken by image viewing system 100, according to various embodiments, when generating and displaying a desired window level.

At step (602) a desired window level is selected at client 110. This can be for example a window level that user 111 has selected for viewing on display 123 at workstation 119. This step is analogous to steps (402) and (502) of FIGS. 4 and 5 respectively.

At step (604) a set of server window levels to be applied to the image are determined. In various embodiments, the determination of the set of server window level occurs at the client by window leveling module 114.

In some embodiments, a number of window levels are generated, where each window level corresponds to a range of desired window levels. In some embodiments, the set of window levels generated is repeatable. As explained above, the term repeatable indicates that if a request is made for a desired window level in a given range, then a given set of window levels is generated.

In some embodiments, one of the server window levels is substantially equal to the desired window level, while the other window levels are smaller or larger. The use of a server window level that is substantially equal to the desired window level can minimize initial display errors given that it can eliminate the need for the client to generate the desired window level from an existing window level, which can in some cases introduce errors. In some embodiments, the server window level that is equivalent to the desired window level is generated first and transmitted to the client 110 separate from the other server window levels. In some embodiments, the server window level that is equivalent to the desired window level is transmitted first in order to minimize display delays. In some embodiments, one of the server window levels is similar to the window level described above in relation to FIG. 4A. More specifically, in some embodiments, at least one of server window levels has substantially the same center as the desired window level and a width that is the next power of 2 larger than twice the width of the desired window level and smaller than a width that would exceed a boundary of the dynamic range of the original image. Thus, for example, in some embodiments, if the desired window width is $w_D = 130$, then the initial window width is $w_s = 4 \ w_D = 4 \times 130 = 520$. In some embodiments, some of the other window levels correspond to a range of intensities that overlaps with the range of intensities that correspond to the desired window level.

In some embodiments, the set of window levels includes a series of increasingly large window levels. In some embodiments, the range of window levels is arranged as a set of adjacent window levels. In other embodiments, the set of window levels is arranged as a set of disparate window levels where each window level may represent a set of intensities that may potentially be of interest to the user.

In some embodiments, the set of window levels is concentrated around the desired window level. Thus, for some changes to desired window level, no additional information will be required from the server. When the desired window level goes outside the range of pixel data represented by the set of server window levels, additional information can be requested from the server. Alternatively, additional information can be requested when the desired window level moves within a threshold of a boundary of the pixel data represented by the set of server window levels. In some embodiments, when the desired window level is within a threshold of the end of the range a new window level is requested to continue the end of the range. In some embodiments, this is achieved by overwriting a window level at the opposite end of range.

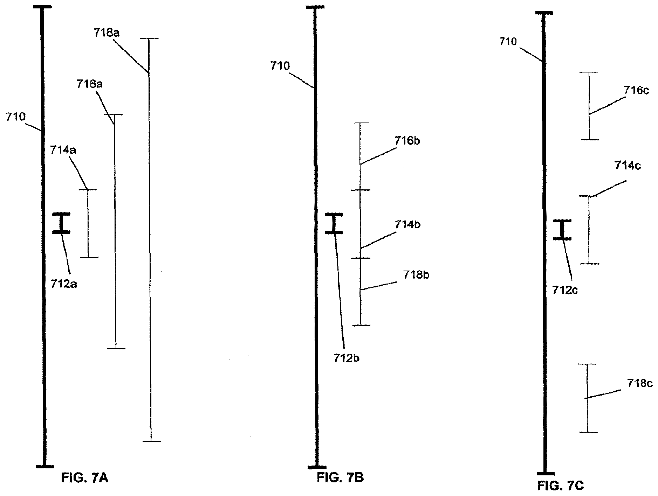

FIGS. 7A to 7C illustrate three example sets of window levels. Reference is first made to FIG. 7A, which illustrates a set of increasingly large window levels concentrated around the desired window level. More specifically, the dynamic range of the original figure stored in image databases 117 of server 109 is illustrated by the length of the bar 710. The desired window level 712a is illustrated having a window width much smaller than the dynamic range of the original image and a center approximately equal to the center value of the dynamic range of the original image. The window centers are not specifically illustrated but the relevant vertical positions of the windows illustrate the range of intensities that are in the window. Thus, for desired window level 712a, the range of intensities is in the middle of dynamic range of the original image.

FIG. 7A also illustrates a set of three server window levels (714a, 716a, and 718a) that is generated according to various embodiments of server 109. As can be seen, windows 714a, 716a, and 718a have substantially the same center as desired window level 712a however each is increasing in size. In other embodiments, one of the server window levels is equal to the desired window level. FIG. 7A could be modified for such embodiments by having the desired window level 712a and server window level 714a be the same size.

FIG. 7B illustrates a set of adjacent window levels 714b, 716b, and 718b that is generated according to various embodiments of server 109. The set of server window levels is centered around the desired window level 712b. Window level 714b has approximately the same center as desired window level 712b, while the other two server window levels 716b and 718b, flank window level 714b on its upper and lower bounds. In some embodiments, such an arrangement of window levels is used when a lossless graphics file, such as PNG, is used.

FIG. 7C illustrates a desired window level 712c and a set of disparate server window levels 714c, 716c, and 718c that is generated according to various embodiments of server 109. Window level 714c has a center that is substantially the same as desired window level 712c. The other window levels 716c and 718c are in different regions of the dynamic range of the original image. Such an arrangement could be used to transmit image data for features that correspond to different ranges of intensities. In other words, each window level may represent a set of intensities that may potentially be of interest to the user. For example, bones and soft tissue show up at opposite ends of the range of intensities and therefore different windows can be used to focus on the range of intensities that correspond to features of these types of tissues. Thus, window level 716c could be used to view pixel values that are in the range of metal, such as metal implants. Similarly, window level 714c could be used to view pixel values that are in the range of bone tissue. Finally, window level 718c could be used to view pixel values that are in the range of soft tissue. As stated above, the features in the figures are not necessarily drawn to scale.

In some embodiments, another window level that can be generated is a window leveling of the entire image. This allows the entire image stored at the server to be transferred to the client. In this manner any desired window level can be generated from this window level. As will be understood by those skilled in the art, the desired window level may have a large error. However, in some embodiments, it is utilized to generate and display a temporary version of the desired window level as additional pixel information is requested from the server to generate and display a higher fidelity version of the desired window level.

It should be understood that the example desired window levels and the arrangement and number of server window levels illustrated in FIGS. 7A to 7C are examples only and are not intended to be limiting in any way.

At step (606) the server window levels are applied to the original image to yield the set of multiple server window levels. In various embodiments, the server window levels are applied at server 109. This step is similar to steps (406) and (506) discussed above except that multiple server window levels are applied.

At step (608) the server window levels are transmitted from server 109 to client 110. The window levels can be transmitted over any appropriate communication channel or network, including but not limited to the Internet or a local area network (LAN) or a cellular network, from server 109 to client 110. In addition, the window level can be stored in and transferred in any appropriate format. In some embodiments, this is achieved by storing the window levels in the color channel of one or more image files and the image file(s) is/are transmitted from server 109 to client 110. The image files used to store the window levels can be referred to as storage images. As mentioned above, in some embodiments, a single color image could be used to store a window level in one or more of its color channels or alpha channel. In some embodiments, grayscale images can be used to store a single window level in its single color channel. It should be understood that this is given as an example only and that any appropriate format or manner of transmitting the image can be used.

At step (610) a client window level is determined such that when combined with one of the server window levels it yields the desired window level. In various embodiments, client 110 selects the most appropriate of the available server window levels and then applies the desired window level. In some embodiments, the most appropriate server window level is the one that results in the least amount of loss when the desired window level is generated. In some embodiments this accomplished by selecting the server window level that includes the desired window level and is closest to the desired window level.

At step (612) the client window level is applied to the server window level that was selected at step (610) in order to produce the desired window level.

At step (614) the desired window level is displayed on display 123.

At step (616) it is determined whether user 111 has modified the desired window level. If not, then no action is taken. If yes, then step (618) is executed.

At step (618) it is determined whether the new desired window level is outside a boundary of the server window levels. In various embodiments, outside the boundaries refers to outside of the boundaries of all the window levels in the set of server window levels. If it is determined that the desired window level is not outside a boundary of the set of server window level, then step (620) is executed. On the other hand, if it is determined that it is outside a boundary, then additional pixel information is requested so that the desired window level can be determined. Specifically, a new server window level is requested for the new desired window level by executing step (604).

At step (620) a determination is made as to whether, the desired window level is within a threshold of the boundary of the server window levels. The threshold can be selected to be any appropriate threshold. In some embodiments, if the window levels are generated such as shown in FIG. 7A, then two examples of thresholds could be either the boundary of the first or second window levels. Similarly, for embodiments in which server window levels are generated such as shown in FIG. 7B, then an example of a threshold could be the boundary of the middle server window level. If it is determined that the desired window level is not within a threshold of the boundary of the server window levels, then step (610) is repeated. In some embodiments, threshold can refer to a ratio. Please refer to the discussion of step (520) of FIG. 5 above for more information.

If the answer determined at step (620) is YES, then step (610) is still repeated but steps (622) to (626) are also executed. At step (622) one or more new server window levels are selected based on the desired window level. In some embodiments, this step is similar to step (604). However, in various embodiments, at step (622) the number of server window levels that is selected can vary based on the desired window level and the server window levels currently cached at the client. Thus, in some embodiments, only a single new server window level will be selected at step (622). In various embodiments, the new server window level is selected at client 110.

At step (624), the one or more server window levels selected at step (622) is/are generated from the original image at server 109.

At step (626), the one or more server window levels are transmitted from server 109 to client 110. As explained above with respect to step (608), this can be done in any appropriate manner.

In some embodiments, steps (622) to (626) are executed concurrently with step (610) and at least some of the steps that follow step (610). If at step (620) the answer YES is determined then the desired window level is within a threshold of the boundary of the server window levels. This may for example occur when user 111 is making incremental changes to the desired window level, which bring it closer and closer to the boundaries of the server window levels. Thus, it may be useful to request additional pixel information from the server so that it is available to be used should user 111 continue to alter the desired window level such that it exceeds the boundaries of the server window level. However, given that the current desired window level does not exceed the current server window levels, additional pixel information is not required to determine and display the desired window level. Accordingly, in some embodiments steps (622) to (626) are executed in the background concurrently with steps (610) to (616). In this manner, image data is retrieved from server 109 and available for a future desired window level from user 111. In some cases, having additional pixel information available at client 110 can reduce delays associated with requesting and transferring pixel data from server 109 to client 110.

In some embodiments, after step (626) is executed, the new server window levels are simply cached until a new desired window level is requested by user 111. In other embodiments, once step (626) has been executed, steps (610) to (614) are re-executed such that the desired window level is updated and the display is also updated. In some embodiments, this is done where the only window level available (prior to executing steps (622) to (626)) for deriving the desired window level is much larger than the desired window level. Consequently, a large error is introduced in deriving the desired window levels from the available server window levels. Accordingly, in some cases, the display of the desired window level can be improved by requesting a more appropriately sized window level from server 109.

It should be understood that the flow charts illustrated in FIGS. 4, 5, and 6 are examples only and that various modifications are contemplated. For example, in some embodiments, a window level of the entire image is included in the set of window levels. In some such embodiments, step 618 is omitted given that the desired window level will not be outside of a boundary of the server window levels.

While the various example embodiments of the image viewing system 100 have been described in the context of medical image management in order to provide an application-specific illustration, it should be understood that localizer display system 100 could also be adapted to any other type of image or document display system.

## Claims

1. A method of displaying a transformation of a server image on a display (123) on a client (110), the server image is stored on a server (109) and has a first dynamic range, the display (123) has a second dynamic range, the second dynamic range is less than the first dynamic range, the method comprising:

    a) selecting a desired window level comprising a desired window width and a desired window center;
    b) determining a server window width and a server window center of a server window level that contains the desired window level;

c) performing a server window level transformation on the server image at the server (109) to generate a server window level image file, the transformation being based on the server window width and the server window center;

d) transmitting the server window level image file from the server (109) to the client (110);

e) determining a third window level transformation so that the third window level transformation when combined with the server window level transformation yields a final displayed image in the desired window level; and

f) performing the third window level transformation on the server window level image file at the client (110) to generate and display the final displayed image.

**2.** The method of claim 1, further comprising:

g) modifying the desired window level;

h) determining if the modified desired window level is outside of a boundary of the server window level;

i) if (h) is true, then performing steps (b) to (f) for the modified desired window level and a new server window level; and

j) if (h) is not true, then performing steps (e) to (f) for the modified desired window level and the server window level.

**3.** The method of claim 3, further comprising:

k) if (h) is not true, then determining if the modified desired window level is between a threshold and the boundary of the server window level; and

l) if (k) is true, then repeating steps (b) to (d) for the modified desired window level and the new server window level.

**4.** The method of 4, further comprising:

m) if (h) is not true, then determining if a difference between the modified desired window level and the server window level exceeds a predetermined value; and

n) if (m) is true, then repeating steps (b) to (d) for the modified desired window level and the new server window level.

**5.** The method of claim 1 wherein the server window width and the server window center of the server window level are determined so that the server window level is repeatable for a range of desired window levels.

**6.** The method of claim 5, further comprising the step of

o) caching the repeatable server window level.

**7.** The method of claim 1, further comprising:

p) determining a plurality of server window levels at step (b);

q) performing a server window level transformation on the server image at the server (109) for each of the plurality of server window levels to generate a plurality of server window level images;

r) transmitting the plurality of server window level images from the server (109) to the client (110).

**8.** A physical computer readable medium stored with a program for causing a computer to display a transformation of a server image on a display, the server image is stored on a server (109) and has a first dynamic range, the display (123) has a second dynamic range, the second dynamic range is less than the first dynamic range, according to the method of any one of the preceding claims.

**Patentansprüche**

**1.** Ein Verfahren zum Anzeigen einer Transformation eines Serverbildes auf einer Anzeige (123) eines Kunden (110), wobei das Serverbild auf einem Server (109) gespeichert ist und einen ersten Dynamikbereich aufweist, die Anzeige (123) einen zweiten Dynamikbereich aufweist und der zweite Dynamikbereich kleiner ist als der erste Dynamikbereich, wobei das Verfahren folgende Schritte umfasst:

a) Auswählen einer erwünschten Fensterlage, die eine erwünschte Fensterbreite und eine erwünschte Fenstermitte umfasst,

b) Bestimmen einer Serverfensterbreite und einer Serverfenstermitte einer Serverfensterlage, die die erwünschte Fensterlage umfasst,

c) Durchführen einer Serverfensterlagetransformation auf das Serverbild am Server (109), um eine Serverfensterlage-Bilddatei zu erstellen, wobei die Transformation auf der Serverfensterbreite und der Serverfenstermitte basiert,

d) Übermitteln der Serverfensterlage-Bilddatei vom Server (109) zum Kunden (110),

e) Bestimmen einer dritten Fensterlagetransformation, wodurch die dritte Fensterlagetransformation, kombiniert mit der Serverfensterlagetransformation, ein angezeigtes Endbild in der erwünschten Fensterlage ergibt, und

f) Durchführen der dritten Fensterlagetransformation auf die Serverfensterlage-Bilddatei beim Kunden (110), um das angezeigte Endbild zu erstellen und anzuzeigen.

2. Das Verfahren nach Anspruch 1, das ferner folgende Schritte umfasst:

g) Ändern der erwünschten Fensterlage,

h) Bestimmen, ob die geänderte erwünschte Fensterlage außerhalb einer Grenze der Serverfensterlage liegt,

i) wenn (h) wahr ist, Durchführen der Schritte (b) bis (f) für die geänderte erwünschte Fensterlage und eine neue Serverfensterlage, und

j) wenn (h) nicht wahr ist, Durchführen der Schritte (e) bis (f) für die geänderte erwünschte Fensterlage und den Serverfensterlage.

3. Das Verfahren nach Anspruch 2, das ferner folgende Schritte umfasst:

k) wenn (h) nicht wahr ist, Bestimmen, ob die geänderte erwünschte Fensterlage zwischen einem Schwellenwert und der Grenze der Serverfensterlage liegt, und

1) wenn (k) wahr ist, Wiederholen der Schritte (b) bis (d) für die geänderte erwünschte Fensterlage und die neue Serverfensterlage.

4. Das Verfahren nach Anspruch 3, das ferner folgende Schritte umfasst:

m) wenn (h) nicht wahr ist, Bestimmen, ob ein Unterschied zwischen der geänderten erwünschten Fensterlage und der Serverfensterlage einen voreingestellten Wert übersteigt, und

n) wenn (m) wahr ist, Wiederholen der Schritte (b) bis (d) für die geänderte erwünschte Fensterlage und die neue Serverfensterlage.

5. Das Verfahren nach Anspruch 1, wobei die Serverfensterbreite und die Serverfenstermitte der Serverfensterlage so bestimmt werden, dass die Serverfensterlage für einen Bereich erwünschter Fensterlagen wiederholbar ist.

6. Das Verfahren nach Anspruch 5, das ferner folgenden Schritt umfasst:

o) Cachen der wiederholbaren Serverfensterlage.

7. Das Verfahren nach Anspruch 1, das ferner folgende Schritte umfasst:

p) Bestimmen einer Vielzahl von Serverfensterlagen in Schritt (b),

q) Durchführen einer Serverfensterlagetransformation auf das Serverbild am Server (109) für jeden der Vielzahl von Serverfensterlagen, um eine Vielzahl von Serverfensterlagebildern zu erstellen,

r) Übermitteln der Vielzahl von Serverfensterlagebildern vom Server (109) zum Kunden (110).

8. Ein physisches computerlesbares Medium, gespeichert mit einem Programm, das einen Computer dazu veranlasst, eine Transformation eines Serverbildes auf einer Anzeige anzuzeigen, wobei das Serverbild auf einem Server (109) gespeichert ist und einen ersten Dynamikbereich aufweist, die Anzeige (123) einen zweiten Dynamikbereich aufweist und der zweite Dynamikbereich kleiner ist als der erste Dynamikbereich, nach dem Verfahren nach einem der vorstehenden Ansprüche.

**Revendications**

1. Procédé d'affichage d'une transformation d'une image de serveur sur un afficheur (123) d'un client (110), ladite image de serveur étant mémorisée sur un serveur (109) et présentant une première gamme dynamique, ledit afficheur (123) présentant une deuxième gamme dynamique et la deuxième gamme dynamique étant moins large que la première gamme dynamique, ledit procédé comprenant les étapes consistant à:

a) sélectionner un niveau de fenêtre souhaité comprenant une largeur de fenêtre souhaitée et un centre de fenêtre souhaité,

b) déterminer une largeur de fenêtre de serveur et un centre de fenêtre de serveur d'un niveau de fenêtre de serveur comprenant le niveau de fenêtre souhaité,

c) effecter une transformation de niveau de fenêtre de serveur sur l'image de serveur au niveau du serveur (109) afin de générer un fichier d'image de niveau de fenêtre de serveur, ladite transformation étant basée sur la largeur de fenêtre de serveur et sur le centre de fenêtre de serveur,

d) transmettre le fichier d'image de niveau de fenêtre de serveur du serveur (109) au client (110),

e) déterminer une troisième transformation de niveau de fenêtre de façon à ce que ladite troisième transformation de niveau de fenêtre, combinée à la transformation de niveau de fenêtre de serveur, génère une image finale affichée dans le niveau de fenêtre souhaité, et

f) effectuer la troisième transformation de niveau de fenêtre sur die fichier d'image de niveau de fenêtre de serveur auprès du client (110) afin de générer et afficher l'image finale affichée.

2.  Procédé selon la revendication 1, comprenant en outre les étapes consistant à:

g) modifier le niveau de fenêtre souhaité,

h) déterminer si le niveau de fenêtre souhaité modifié se situe hors d'une limite du niveau de fenêtre de serveur,

i) si (h) est vrai, effectuer les étapes (b) à (f) pour le niveau de fenêtre souhaité modifié et un nouveau niveau de fenêtre de serveur, et

j) si (h) n'est pas vrai, effectuer les étapes (e) à (f) pour le niveau de fenêtre souhaité modifié et le niveau de fenêtre de serveur.

3.  Procédé selon la revendication 2, comprenant en outre les étapes consistant à:

k) si (h) n'est pas vrai, déterminer si le niveau de fenêtre souhaité modifié est compris entre une valeur seuil et la limite du niveau de fenêtre de serveur, et

1) si (k) est vrai, répéter les étapes (b) à (d) pour le niveau de fenêtre souhaité modifié et le nouveau niveau de fenêtre de serveur.

4.  Procédé selon la revendication 3, comprenant en outre les étapes consistant à:

m) si (h) n'est pas vrai, déterminer si une différence entre le niveau de fenêtre souhaité modifié et le niveau de fenêtre de serveur dépasse une valeur prédéterminée, et

n) si (m) est vrai, répéter les étapes (b) à (d) pour le niveau de fenêtre souhaité modifié et le nouveau niveau de fenêtre de serveur.

5.  Procédé selon la revendication 1, **caractérisé en ce que** la largeur de fenêtre de serveur et le centre de fenêtre de serveur du niveau de fenêtre de serveur sont déterminés de façon à ce que le niveau de fenêtre de serveur soit répétable pour une plage de niveaux de fenêtre souhaités.

6.  Procédé selon la revendication 5, comprenant en outre l'étape consistant à:

o) stocker en mémoire cache le niveau de fenêtre de serveur répétable.

7.  Procédé selon la revendication 1, comprenant en outre les étapes consistant à:

p) déterminer une multitude de niveaux de fenêtre de serveur à l'étape (b),

q) effectuer une transformation de niveau de fenêtre de serveur sur l'image de serveur au niveau du serveur (109) pour chacun de la multitude de niveaux de fenêtre de serveur afin de générer une multitude d'images de niveau de fenêtre de serveur,

r) transmettre la multitude d'images de niveau de fenêtre de serveur du serveur (109) au client (110).

8.  Support physique lisible par ordinateur, stocké avec un programme permettant à un ordinateur d'afficher une transformation d'une image de serveur sur un afficheur, ladite image de serveur étant mémorisée sur un serveur (109) et présentant une première gamme dynamique, l'afficheur (123) présentant une deuxième gamme dynamique et la deuxième gamme dynamique étant moins large que la première gamme dynamique, selon le procédé selon l'une quelconque des revendications précédentes.

FIG. 1A

FIG. 1B

FIG. 2

FIG. 3

```
                    ┌─────────────────────────┐  402
                    │     Select Desired WL   │╱
                    └─────────────────────────┘
                                 │
                                 ▼
         ┌──────▶┌─────────────────────────┐  404              400
         │       │  Select New Server WL that│╱               ↘
         │       │   Contains Desired WL    │
         │       └─────────────────────────┘
         │                    │
         │                    ▼
         │       ┌─────────────────────────┐  406
         │       │     Apply Server WL     │╱
         │       └─────────────────────────┘
         │                    │
         │                    ▼
         │       ┌─────────────────────────┐  408
         │       │  Transmit Server WL to client│
         │       └─────────────────────────┘
         │                    │ ◀──────────────────┐
         │                    ▼                     │
         │       ┌─────────────────────────┐  410   │
         │       │ Determine a WL to yield Desired│   │
         │       │    WL from Server WL    │       │
         │       └─────────────────────────┘       │
         │                    │                     │
         │                    ▼                     │
         │       ┌─────────────────────────┐  412   │
         │       │ Apply the WL to the Server WL to│ │
         │       │      yield Desired WL   │       │
         │       └─────────────────────────┘       │
         │                    │                     │
         │                    ▼                     │
         │       ┌─────────────────────────┐  414   │
         │       │    Display Desired WL   │╱       │
         │       └─────────────────────────┘       │
         │                    │   ◀────────────┐    │
         │      416           ▼                │    │
         │          ╱◇◇◇◇◇◇◇◇◇◇◇◇◇╲            │    │
         │         ◇   Has Desired WL  ◇  NO   │    │
         │          ◇   Changed?      ◇────────┘    │
         │           ╲◇◇◇◇◇◇◇◇◇◇◇◇◇╱              │
         │                    │ YES                 │
         │          418       ▼                     │
         │          ╱◇◇◇◇◇◇◇◇◇◇◇◇◇╲   NO            │
         │         ◇  Is the Desired WL ◇───────────┘
         │          ◇ Outside a Boundary◇
         │           ◇ of the Server WLs?◇
         │            ╲◇◇◇◇◇◇◇◇◇◇◇◇╱
         │                    │ YES
         └────────────────────┘
```

FIG. 4

FIG. 5

FIG. 6

FIG. 7A

710

712a

714a

718a

718a

FIG. 7B

710

712b

718b

714b

716b

FIG. 7C

710

712c

714c

716c

718c

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9928858 A, Algotec Systems LTD [IL]; Burak Yoram [IL]; Nizry Ronen [IL]; Benjamin)